# DEMANDE DE BREVET EUROPEEN

(11) **EP 4 063 149 A1**
(43) Date de publication de la demande: **28.09.2022**
(21) Numéro de dépôt: 21164489.3
(22) Date de dépôt: 24.03.2021
(51) Int. Cl.: B60G 11/27, B60G 17/04, B60G 17/052, B60G 17/08

(54) **SUSPENSION DE VEHICLE**

(71) Demandeur: Robert Bosch GmbH, 70442 Stuttgart (DE)
(72) Inventeur: PERON, Sébastien, 12740 Sebazac (FR)
(74) Mandataire: Cabinet HERRBURGER

(57) **Abrégé**

Système de châssis (2) de véhicule (4) comprenant plusieurs jambes de force à ressort (6) avec chacune un amortisseur (8) et un élément de ressort (10). L'amortisseur (8) comporte un cylindre d'amortisseur (28) logeant un piston (30) guidé par une tige de piston (32) ainsi qu'une soupape d'amortisseur (18) pour commander le passage du fluide d'amortisseur. L'élément de ressort (10) comporte un ressort pneumatique avec une soupape de ressort (20). Les jambes de force à ressort (6) comportent chacune au moins une installation de mesure d'inertie (14, 16) et, le système de châssis (2) comporte une unité centrale de commande (12) couplée aux installations de mesure d'inertie (14, 16) des jambes de force à ressort (6), à leurs soupapes d'amortisseur (18) et leurs soupapes de ressort (20) et réalisé pour commander le comportement d'amortissement et de ressort des jambes de force (6) en fonction des signaux des installations de mesure d'inertie (14, 16) par la commande des soupapes d'amortisseur (18) et des soupapes de ressort (20).

## Description

### DOMAINE DE L'INVENTION

La présente invention se rapporte à un système de châssis de véhicule comprenant plusieurs jambes de force à ressort avec chacune un amortisseur et un élément de ressort, l'amortisseur comportant un cylindre d'amortisseur logeant un piston guidé par une tige de piston ainsi qu'une soupape d'amortisseur pour commander le passage du fluide d'amortisseur ou son entrée et sa sortie.

### ETAT DE LA TECHNIQUE

Les véhicules automobiles actuels ont en partie des jambes de force à ressort munies d'amortisseurs ayant un comportement d'amortisseur réglable. Dans un tel véhicule, on intègre de plus en plus des capteurs d'accélération fournissant une information relative aux mouvements du véhicule. Une unité centrale de commande reçoit les signaux des capteurs d'accélération et peut en déduire les adaptations nécessaires ou souhaitables du comportement d'amortissement. L'unité de commande est reliée aux amortisseurs et peut ainsi commander les soupapes pour commander le débit du liquide d'amortisseur ou l'entrée et la sortie du liquide d'amortisseur.

L'équipement du véhicule, les capteurs d'accélération, le câblage de l'unité de commande avec tous les amortisseurs et les capteurs d'accélération est une solution compliquée et au montage final il faut toujours vérifier le fonctionnement. En outre, la régulation du comportement d'amortissement peut dépendre de l'endroit où sont installés les capteurs d'accélération.

### BUT DE L'INVENTION

La présente invention a pour but de développer un dispositif permettant d'adapter le comportement d'amortissement des amortisseurs équipant des jambes de force à ressort, en réduisant les moyens d'intégration et en améliorant le confort.

### EXPOSE ET AVANTAGES DE L'INVENTION

A cet effet, l'invention a pour objet un système de châssis du type défini ci-dessus, caractérisé en ce que l'élément de ressort comporte un ressort pneumatique avec au moins une soupape de ressort, les jambes de force à ressort comportant chacune au moins une installation de mesure d'inertie et, le système de châssis comporte une unité de commande centrale qui peut être couplée aux installations de mesure d'inertie des jambes de force à ressort, leurs soupapes d'amortisseur et leurs soupapes de ressort et qui est réalisé pour commander le comportement d'amortissement et de ressort des jambes de force à ressort en fonction des signaux des installations de mesure d'inertie par la commande des soupapes d'amortisseur et des soupapes de ressort.

En d'autres termes, l'invention propose un système de châssis de véhicule comportant plusieurs jambes de force à ressort ayant chacune un amortisseur et un élément de ressort ; l'amortisseur comporte un cylindre recevant un piston guidé par une tige de piston ainsi qu'une soupape d'amortisseur pour commander le passage du liquide d'amortisseur ou l'entrée et la sortie de liquide d'amortisseur. Selon l'invention, l'élément de ressort est un ressort pneumatique ayant au moins une soupape et les jambes de force à ressort ont chacune au moins une installation de mesure d'inertie ; le système de châssis comporte une unité centrale de commande reliée aux installations de mesure d'inertie des jambes de force à ressort, à leur soupape d'amortisseur et à leur soupape de ressort pour qu'en fonction des signaux des installations de mesure d'inertie, commander le comportement d'amortissement et le comportement de ressort des jambes de force à ressort en commandant les soupapes d'amortisseur et les soupapes de ressort.

L'amortisseur envisagé est notamment un amortisseur linéaire, c'est-à-dire axial, fondé sur le mouvement d'un piston dans le cylindre d'amortisseur. Le comportement d'amortissement peut se régler par la commande de la soupape d'amortisseur. La soupape d'amortisseur est ici intégrée dans l'amortisseur et elle influence la section libre de l'ouverture d'un canal traversé par le fluide. Lorsque le piston déplace le fluide d'amortisseur, il est prévu pour un certain type d'amortisseur, que le fluide d'amortisseur soit refoulé à travers le canal par le mouvement du piston. La variation active de la section de l'ouverture influence la perte de charge de sorte qu'une force d'amortissement plus ou moins importante s'oppose au mouvement du piston. Dans d'autres types de construction, on peut, par exemple, adapter la pression du fluide d'amortisseur de sorte que la soupape d'amortisseur lance l'entrée ou la sortie du liquide pour influencer ainsi le comportement d'amortissement. D'autres variantes sont évidemment envisageables et ne sont pas exclues.

Le ressort pneumatique comporte une ou plusieurs chambres d'air servant d'élément de ressort. Par exemple, en alimentant ou en évacuant alternativement de l'air, on peut influencer la raideur des ressorts. Le ressort pneumatique comporte au moins une soupape de ressort.

Par exemple, l'élément de ressort comporte deux chambres qui se suivent axialement, c'est-à-dire qui sont en série et communiquent par une liaison fluidique à travers la soupape à ressort. Les deux chambres fonctionnent respectivement comme ressort l'une vis-à-vis de l'autre. En commandant la soupape de ressort, on peut non seulement avoir une force de ressort agissant vers l'extérieur, mais en plus, également un certain effet d'amortissement. En outre, au moins une soupape de ressort est prévue pour commander l'entrée ou la sortie de l'air dans les chambres pour ainsi commander la pression et, par conséquent, la force du ressort.

Selon un développement particulier de l'invention, la jambe de force à ressort comporte au moins une installation de mesure d'inertie reliée à l'unité centrale de commande. Cette installation de mesure d'inertie transmet des signaux à l'unité de commande pour fournir des informations relatives à une certaine fraction de mouvement du véhicule concerné vers l'unité de commande.

De façon analogue à l'état de la technique rappelé ci-dessus, à partir du mouvement saisi, on peut déduire une modification souhaitée ou nécessaire du comportement d'amortissement et/ou du comportement de ressort. Cela permet d'influencer la force de ressort agissant sur la roue concernée, couplée mécaniquement à la jambe de force à ressort, ce qui réduit les oscillations de la charge de roue et améliore la dynamique de roulage et la sécurité de circulation. L'accélération de la structure est réduite et le confort des passagers est amélioré. En particulier, la combinaison du réglage du ressort et de l'amortisseur permet de réduire ou d'éliminer les oscillations verticales dans la plage des très basses fréquences, au plus égales à 8 Hz, pour éviter le mal de voyage des passagers.

Il est avantageux qu'au moins une installation de mesure d'inertie équipe la jambe de force à ressort ou une partie de celle-ci. Elle permet de mesurer le mouvement le long d'au moins une direction dans l'espace avec un ou plusieurs capteurs d'accélération. Le capteur d'accélération pourrait notamment être réalisé en technique de semi-conducteurs. Une installation de mesure d'inertie est installée notamment directement sur un segment de la jambe de force à ressort relié au châssis du véhicule. Si le cylindre de l'amortisseur est couplé à la roue ou à un bras transversal, la tige de piston étant reliée au châssis, alors au moins un capteur d'accélération pourra être installé sur un composant relié à la tige de piston. De façon analogue, cette solution s'applique à la situation inverse. Il est également proposé de saisir le mouvement de l'extrémité de la jambe de force à ressort à l'opposé de l'extrémité côté châssis, pour détecter les irrégularités locales de la chaussée et commander de façon correspondante.

Le montage d'une installation de mesure d'inertie sur la jambe de force respective permet de simplifier l'intégration des composants nécessaires au système de châssis. En particulier, on fait l'économie d'au moins un composant de l'installation de mesure d'inertie et les jambes de force à ressort correspondantes peuvent être reliées à l'installation de mesure d'inertie qui les équipe, par un seul câble les reliant à l'unité centrale de commande, ce qui rend inutile tout autre câblage des composants supprimés.

La jambe de force à ressort peut avoir plusieurs niveaux de conduite par l'unité de commande. Cela se fait par la sélection d'un niveau de force de ressort parmi les niveaux de force de ressort prédéfinis et sous la commande de l'unité de commande. Ainsi, en particulier, en fonction de la charge du véhicule qui se répercute directement comme charge sur la jambe de force à ressort, on règle la force de ressort selon des niveaux. Cela se fait automatiquement, directement dans l'unité de commande en exploitant les mouvements saisis du véhicule. On peut envisager deux, trois, quatre ou plus de niveaux de force de ressort. En outre, la force à ressort peut être commandée de manière semi-active. Une commande semi-active permet d'adapter au moins l'élément de ressort par une courbe caractéristique, à l'étape de conduite instantanée, en particulier, en influençant en continu au moins une soupape de ressort. De façon préférentielle, l'élément de ressort est un élément de ressort actif. La jambe de force à ressort est ainsi commandée de manière active et elle applique, de façon active, une force s'opposant au poids ou à la charge exercée sur la jambe de force. Pour cela, on peut utiliser une source d'air comprimé alimentant en air comprimé et/ou un actionneur à fluide.

En outre, on peut intégrer une installation de mesure d'inertie dans la jambe de force à ressort. Elle fait par conséquence partie intégrante de la jambe de force à ressort et peut, par exemple, être installée dans une partie de son boîtier. De façon préférentielle, tous les composants commandés de la jambe de force à ressort sont reliés par une interface commune, notamment à l'unité de commande. L'interface comporte une douille ou un connecteur à plusieurs branchements électriques qui peuvent être reliés par des connecteurs ou des douilles de formes complémentaires.

Selon un développement avantageux, au moins l'une des jambes de force à ressort comporte deux installations de mesure d'inertie, distinctes. Elles sont dans des positions différentes de la jambe de force à ressort et saisissent par conséquence deux mouvements appliqués de manière différente. Une installation de mesure d'inertie proche du châssis pourra saisir le mouvement que l'on peut attribuer particulièrement au châssis alors que l'installation de mesure d'inertie non tournée vers le châssis pourra saisir particulièrement le mouvement associé à la roue.

De façon préférentielle, dans le système de châssis, au moins deux jambes de force à ressort ont chacune une installation de mesure d'inertie sur le côté de la jambe de force à ressort non tourné vers le châssis. Cette installation de mesure d'inertie saisit le mouvement de la roue correspondante. Ainsi, les jambes de force à ressort concernées permettent à l'unité de commande de saisir directement les irrégularités de la chaussée pour ensuite régler le comportement d'amortissement et/ou le comportement de ressort des jambes de force associées à la voie correspondante du véhicule.

Suivant une autre caractéristique préférentielle, au moins deux jambes de force à ressort ont chacune une installation de mesure d'inertie sur le côté de la jambe de force à ressort tourné vers le châssis du véhicule. Ainsi, on saisit le mouvement local du châssis du véhicule qui ne dépend pas directement de la roue correspondante. En particulier, toutes les jambes de force à ressort ont une installation de mesure d'inertie sur le côté des jambes de force à ressort tourné vers le châssis. Cela permet de saisir l'ensemble du mouvement du châssis du véhicule avec les seules jambes de force à ressort.

Suivant une autre caractéristique avantageuse, le système de châssis comporte une installation centrale de mesure d'inertie couplée à l'unité de commande. Celle-ci peut se trouver dans l'unité centrale de commande ce qui réduit le câblage entre l'unité de commande et l'installation centrale de mesure d'inertie et rend inutile un câblage dédié. L'installation centrale de mesure d'inertie ou l'unité de commande qui l'héberge peuvent alors être installées dans un segment du véhicule qui est à proximité du centre de gravité. De façon particulièrement avantageuse, l'installation centrale de mesure d'inertie est combinée à l'utilisation des installations de mesure d'inertie tournées vers le châssis du véhicule de toutes les jambes de force à ressort pour saisir, d'une façon particulièrement précise, le mouvement dans l'espace du châssis du véhicule.

Comme exposé ci-dessus, il est particulièrement avantageux que les jambes de force à ressort soient couplées respectivement par un unique câble à l'unité centrale de commande. On réduit ainsi, de manière significative le câblage et on diminue le coût de l'intégration. Chaque jambe de force à ressort comporte à cet effet une interface avec un connecteur relié à un connecteur complémentaire.

De manière particulièrement préférentielle, l'unité de commande centrale est une unité de commande ABS et/ou ESP. Grâce à un algorithme complémentaire, cette unité a une fonction de commande des jambes de force à ressort. L'unité de commande peut en outre être réalisée pour qu'au déclenchement d'une phase ESR ou ABS, elle transmet un certain signal aux jambes de force à ressort pour régler leur comportement d'amortissement et/ou leur comportement de ressort, directement sur une grandeur particulièrement appropriée pour améliorer l'adhérence des roues dans le cas concerné.

De façon préférentielle, l'élément de ressort est un système à deux chambres. Comme déjà exposé, la soupape de ressort réalise la liaison fluidique entre les deux chambres et influence celle-ci en réglant la section de passage. Cela permet, en plus du comportement de ressort, d'adapter également le comportement d'amortissement. Toutefois, il est également avantageux que l'élément de ressort comporte au moins une soupape d'entrée et/ou de sortie permettant d'influencer la quantité d'air dans les chambres pour régler ainsi la constante de ressort.

Le système de châssis selon l'invention s'applique tout particulièrement à un véhicule automobile.

### BREVE DESCRIPTION DES DESSINS

La présente invention sera décrite ci-après de manière plus détaillée à l'aide d'un exemple de système de châssis, selon l'invention, représenté dans les dessins annexés dans lesquels :
[Fig. 1] schéma du système de châssis,
[Fig. 2] schéma d'une chambre de force à ressort.

### DESCRIPTION D'UN MODE DE REALISATION

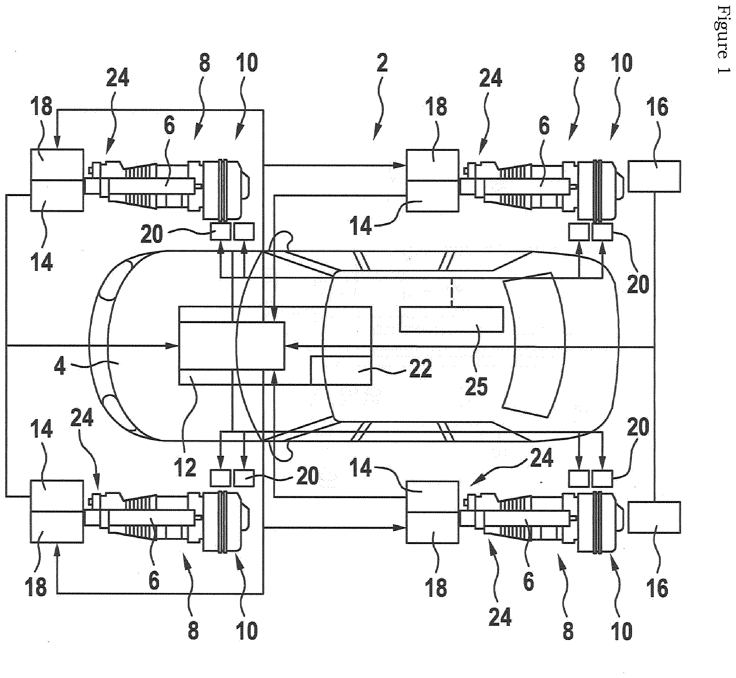

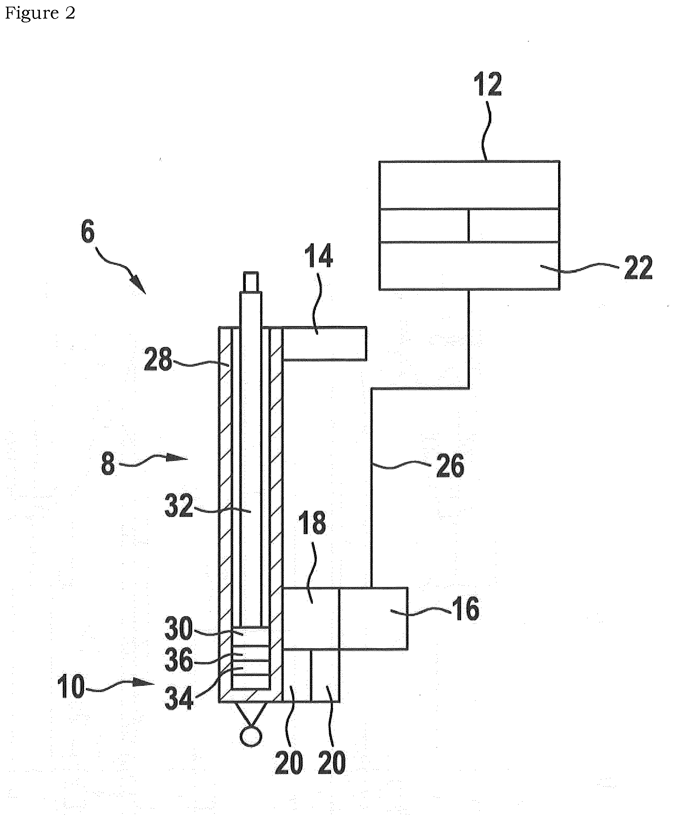

La figure 1 montre un système de châssis 2 pour un véhicule 4 ; le système de châssis comprend plusieurs jambes de force à ressort 6. Ces jambes de force ont chacune un amortisseur 8 et un élément de ressort-10. Les jambes de force 6 seront décrites de manière plus détaillée à l'aide de la figure 2. Le système de châssis 2 comporte en outre une unité centrale de commande 10 couplée aux jambes de force à ressort 6. Elle influence le comportement d'amortissement et de ressort des jambes de force à ressort par leur commande sélective, en fonction de signaux fournis par les installations de mesure d'inertie 14 et 16 intégrées dans les jambes de force à ressort. A cet effet, les jambes de force à ressort comportent des soupapes d'amortisseur 18 pour modifier le comportement d'amortissement et des soupapes de ressort 20 pour modifier le comportement de ressort. Un compresseur 25 est relié à l'élément de ressort 10 par les soupapes de ressort 20. L'unité centrale de commande 12 peut être une unité de commande ABS et/ou ESP. La fonction de commande des jambes de force à ressort 6 peut être implémentée par un algorithme supplémentaire.

Le système de châssis 2 comporte une installation centrale de mesure d'inertie 22 intégrée dans l'unité de commande 12 ou reliée directement à celle-ci. Il est intéressant d'installer l'installation centrale de mesure d'inertie 22 sur la même platine que les composants fonctionnels de l'unité de commande 22. En variante, elle peut également être réalisée séparément mais couplée mécaniquement de façon directe à l'unité de commande 12 et se loger, par exemple, dans le même boîtier.

La liaison entre l'unité de commande 12 et les installations de mesure d'inertie 14 et 16 ainsi que les soupapes 18 et 20 sont schématisées par des flèches soulignant les liaisons. Toutes les liaisons ne sont pas réalisées de préférence, par un unique câble 26 comme le montre la figure 2.

Chacune des jambes de force à ressort 6 comporte à sa première extrémité 24 une première installation de mesure d'inertie 14 prévue sur le côté de la jambe de force à ressort 6 couplée à une roue du véhicule 4. Deux des jambes de force à ressort 6 représentées ici, côté arrière, ont chacune en plus une seconde installation de mesure d'inertie 16. Toutes les installations de mesure d'inertie 14 et 16 sont réalisées par un ou plusieurs capteurs d'accélération. Les premières installations de mesure d'inertie 14 permettent notamment de saisir les mouvements des différentes roues et en particulier le débattement vertical occasionné par les irrégularités de la chaussée. Les secondes installations de mesure d'inertie 16 peuvent saisir par l'installation centrale de mesure d'inertie 22 le mouvement du châssis du véhicule et communiquer ces informations à l'unité de commande 12 pour leur exploitation.

La figure 2 montre schématiquement une jambe de force à ressort 6. La jambe de force à ressort 6 est reliée à l'unité de commande 12 par un câble 26. De façon préférentielle, la jambe de force à ressort 6 a un élément de ressort actif 10. Les soupapes de ressort 20 sont reliées au compresseur 25 (non représenté ici). L'amortisseur 8 de la jambe de force à ressort 6 a un cylindre d'amortisseur 28 recevant un piston 30 guidé par une tige de piston 32. La soupape d'amortisseur 18 commande l'ouverture de passage du fluide d'amortisseur. L'élément de ressort 10 comporte deux chambres à air 34 et 36 qui se remplissent sélectivement avec l'air du compresseur 25.

Il convient en outre de remarquer que l'on peut également envisager l'installation centrale de mesure d'inertie sous la forme d'un capteur d'accélération intégré qui remplace normalement trois capteurs d'accélération du châssis.

### NOMENCLATURE DES ELEMENTS PRINCIPAUX

2 système de châssis
4 véhicule
6 jambe de force à ressort
8 amortisseur
10 élément de ressort
12 unité centrale de commande
14 installation de mesure d'inertie
16 installation de mesure d'inertie
18 soupape d'amortisseur
20 soupape de ressort
22 installation de mesure d'inertie
24 première extrémité de la jambe de force à ressort
25 compresseur
26 câble
28 cylindre d'amortisseur
30 piston
32 tige de piston
34 chambre à air
36 chambre à air

## Revendications

1. Système de châssis (2) de véhicule (4) comprenant plusieurs jambes de force à ressort (6) avec chacune, un amortisseur (8) et un élément de ressort (10),
l'amortisseur (8) comportant un cylindre d'amortisseur (28) logeant un piston (30) guidé par une tige de piston (32) ainsi qu'une soupape d'amortisseur (18) pour commander le passage du fluide d'amortisseur ou l'entrée et la sortie du fluide d'amortisseur,
système **caractérisé en ce que**
- l'élément de ressort (10) comporte un ressort pneumatique avec au moins une soupape de ressort (20),
- les jambes de force à ressort (6) comportant chacune au moins une installation de mesure d'inertie (14, 16) et,
- le système de châssis (2) comporte une unité centrale de commande (12) qui peut être couplée aux installations de mesure d'inertie (14, 16) des jambes de force à ressort (6), leurs soupapes d'amortisseur (18) et leurs soupapes de ressort (20) et qui commande le comportement d'amortissement et de ressort des jambes de force à ressort (6) en fonction des signaux des installations de mesure d'inertie (14, 16) par la commande des soupapes d'amortisseur (18) et des soupapes de ressort (20).

2. Système de châssis (2) selon la revendication 1,
**caractérisé en ce que**
l'élément de ressort (10) est un élément de ressort actif (10).

3. Système de châssis (2) selon la revendication 1 ou 2,
**caractérisé en ce que**
au moins une installation de mesure d'inertie (14, 16) est intégrée dans la jambe de ressort (6).

4. Système de châssis (2) selon l'une des revendications précédentes,
**caractérisé en ce que**
au moins l'une des jambes de force à ressort (6) comporte deux installations de mesure d'inertie (14, 16) distinctes.

5. Système de châssis (2) selon l'une des revendications précédentes,
**caractérisé en ce que**
au moins deux jambes de force à ressort (6) ont chacune une installation de mesure d'inertie (14, 16) qui sont sur le côté de la jambe de force à ressort (6) respective, à l'opposé du châssis.

6. Système de châssis (2) selon l'une des revendications précédentes,
**caractérisé en ce que**
au moins deux jambes de force à ressort (6) comportent chacune une installation de mesure d'inertie (14, 16) sur le côté de la jambe de force à ressort (6) correspondante, tourné vers le châssis.

7. Système de châssis (2) selon l'une des revendications précédentes,
**caractérisé en ce que**
une installation centrale de mesure d'inertie (22), est couplée à l'unité de commande (12).

8. Système de châssis (2) selon l'une des revendications précédentes,
**caractérisé en ce que**
les jambes de force à ressort -6) peuvent être couplées respectivement par un seul câble (26) à l'unité centrale de commande (12).

9. Système de châssis (2) selon l'une des revendications précédentes,
**caractérisé en ce que**
l'unité centrale de commande (12) est une unité de commande ABS et/ou ESP.

10. Système de châssis (2) selon l'une des revendications précédentes,
**caractérisé en ce que**
au moins l'une des soupapes de ressort (20) est couplée à un compresseur (25).
